# FASCICULE DE BREVET EUROPEEN

(11) **EP 4 467 287 B1**
(45) Date de publication et mention de la délivrance du brevet: **18.11.2026**
(21) Numéro de dépôt: 24176238.4
(22) Date de dépôt: 16.05.2024
(51) Int. Cl.: B25B 13/06, F16B 5/02, F16B 12/00, F16B 23/00, B25B 15/00, B25B 21/02, B25B 23/10, F16B 12/14

(54) **VIS CONFIGUREE POUR EQUIPER UN ARTICLE ET OUTIL D'ACTIONNEMENT D'UNE TELLE VIS**
SCHRAUBE ZUR AUSSTATTUNG EINES ARTIKELS UND WERKZEUG ZUR BETÄTIGUNG SOLCH EINER SCHRAUBE
SCREW CONFIGURED TO EQUIP AN ARTICLE AND TOOL FOR ACTUATING SUCH A SCREW

(30) Priorité: 23.05.2023 FR 2305108
(43) Date de publication de la demande: 27.11.2024
(73) Titulaire: Hermes Sellier, 75008 Paris (FR)
(72) Inventeur: ROUZAUD, Camille, 92200 NEUILLY SUR SEINE (FR)
(74) Mandataire: Santarelli

(56) Documents cités:
- WO-A1-2017/018894
- WO-A2-2015/159034
- DE-A1- 102014 114 782
- FR-A- 1 193 927
- US-B2- 6 935 214

## Description

### DOMAINE TECHNIQUE DE L'INVENTION

La présente invention concerne une vis configurée pour équiper un article, notamment de maroquinerie ou bien de bijouterie, de cosmétique ou encore d'ameublement, et d'un outil d'actionnement d'une telle vis pour son assujettissement mécanique sur un tel article.

L'invention concerne aussi un tel article, notamment de maroquinerie ou bien de bijouterie, de cosmétique ou encore d'ameublement, pourvu d'au moins une première partie configurée pour être assujettie mécaniquement à un support quelconque à l'aide d'une telle vis, notamment actionnée par un tel outil.

L'invention concerne également un procédé d'assemblage et/ou de désassemblage d'un tel article à l'aide d'une telle vis par un tel outil d'actionnement.

### ÉTAT DE LA TECHNIQUE

On connaît des articles comportant une première partie et une deuxième partie assujettie mécaniquement à la première partie par le biais d'une vis de fixation pourvue d'une tête munie d'une empreinte d'actionnement et d'une tige filetée s'étendant en saillie de la tête, d'un côté opposé à l'empreinte.

Un outil tel qu'un tournevis ayant une empreinte complémentaire de celle de la tête de la vis de fixation permet d'actionner cette vis.

L'assujettissement et le désassujettissement de la première partie et de la deuxième partie de l'article se fait par le vissage et le dévissage de la vis de fixation grâce au tournevis.

En particulier, pour l'assujettissement par vissage, la tige filetée de la vis de fixation est passée au travers de la première partie et vissée dans un taraudage ménagé dans la deuxième partie du fait d'un couple exercé par le tournevis sur la tête de vis lorsque l'empreinte complémentaire du tournevis coopère avec l'empreinte de la tête de vis.

Dans de nombreux cas, l'empreinte ménagée sur la tête de vis est visible lorsque la première partie et la deuxième partie de l'article sont assujettis mécaniquement.

Il est connu de disposer par exemple un cache sur la tête de vis pour dissimuler l'empreinte.

Il est connu aussi des systèmes plutôt du type vis et écrou, ayant une tête de vis sans empreinte et qui nécessite d'une part, de disposer l'écrou à l'opposé de la tête de vis sur la deuxième partie et, optionnellement d'autre part, de ménager une contre-forme dans la première partie pour empêcher la rotation libre au moins de la tête de vis.

La demande de brevet allemand DE 10 2014 114782 décrit une vis de forage configurée pour assujettir une tôle sur un élément structurel d'un véhicule à l'aide d'un outil d'entrainement ayant une forme de douille.

Le brevet américain US 6 935 214 décrit une vis non dévissable configurée pour assujettir une plaque à un véhicule à l'aide d'un outil d'entrainement.

La demande internationale WO 2015/159034 décrit un écrou antivol pour une jante d'un véhicule automobile, lequel écrou est actionnable à l'aide d'une clé présentant la forme d'une douille.

Le brevet français FR 1 193 927 décrit un système de vis à cannelures avec un outil à prise latérale pour un lit.

La demande internationale WO 2017/018894 décrit un outil pour retirer des éléments de fixations qui s'apparente à une pince.

### EXPOSÉ DE L'INVENTION

L'invention vise à fournir un article de maroquinerie ou bien de bijouterie, de cosmétique ou encore d'ameublement, pourvu d'au moins une première partie assujettie mécaniquement à un support quelconque, l'article comportant une vis qui est configurée pour assujettir mécaniquement au moins une première partie au support quelconque, d'un genre similaire, et qui soit particulièrement simple et commode tant à la fabrication qu'à l'utilisation.

L'invention a pour objet, selon un premier aspect, un article de maroquinerie ou bien de bijouterie, de cosmétique ou encore d'ameublement, pourvu d'au moins une première partie assujettie mécaniquement à un support quelconque, l'article comportant une vis qui est configurée pour assujettir mécaniquement l'au moins une première partie au support quelconque à l'aide d'un outil d'actionnement, la vis comportant une tête et un corps s'étendant longitudinalement en saillie de la tête, la tête comportant une partie externe et une partie interne interposée entre la partie externe et le corps, le corps étant au moins partiellement fileté, l'article étant caractérisé en ce que la partie interne de la tête de la vis comporte au moins un organe d'entrainement s'étendant radialement au-delà de la partie externe et étant configuré pour être sollicité et entraîné en rotation par l'outil d'actionnement de sorte à visser et/ou dévisser la vis et ainsi assujettir et/ou désassujettir mécaniquement l'au moins une première partie de l'article au support quelconque, et l'article étant caractérisé en ce que la vis est introduite dans un premier orifice ménagé dans l'au moins une première partie avec la tête de la vis qui vient à fleur d'une première surface externe de l'au moins une première partie de l'article lorsque l'au moins une première partie est assujettie mécaniquement au support quelconque.

Dans l'article selon l'invention, c'est donc la partie interne de la tête qui est pourvue de l'au moins un organe d'entrainement, lequel, en s'étendant radialement au-delà de la partie externe, est en outre accessible à l'outil d'actionnement pour transmettre un couple au reste de la vis.

Lorsque la vis est introduite dans la première partie et dans le support auquel elle est assujettie, l'au moins un organe d'entrainement est rendu invisible ou quasiment invisible. Seule reste visible principalement la partie externe qui est dépourvue d'une empreinte d'actionnement.

Des caractéristiques préférées, simples, commodes et économiques de l'article selon l'invention sont présentées ci-après.

La partie interne de la tête peut être pourvue d'une pluralité d'organes d'entrainement s'étendant radialement au-delà de la partie externe et d'au moins un espace séparant les organes d'entraînement.

La partie interne de la tête peut comporter au moins une première encoche ménagée circonférentiellement et délimitée par un premier bord d'attaque et un deuxième bord d'attaque opposé au premier bord d'attaque, avec le premier bord d'attaque qui forme un premier organe d'entrainement configuré pour être sollicité et entraîné en rotation par l'outil d'actionnement de sorte à visser la vis et ainsi assujettir mécaniquement l'au moins une première partie de l'article au support quelconque, et avec le deuxième bord d'attaque qui forme un deuxième organe d'entrainement configuré pour être sollicité et entraîné en rotation par l'outil d'actionnement de sorte à dévisser la vis et ainsi désassujettir mécaniquement l'au moins une première partie de l'article au support quelconque.

La partie interne de la tête peut comporter au moins une deuxième encoche ménagée circonférentiellement et délimitée par un troisième bord d'attaque et un bord fuyant incurvé opposé au troisième bord d'attaque, avec le troisième bord d'attaque qui forme un premier organe d'entrainement configuré pour être sollicité et entraîné en rotation par l'outil d'actionnement de sorte à visser la vis et ainsi assujettir mécaniquement l'au moins une première partie de l'article au support quelconque, et avec le bord fuyant incurvé qui empêche l'entraînement en rotation de la tête par l'outil d'actionnement et ainsi le dévissage de la vis et le désassujettissement mécanique de l'au moins une première partie de l'article au support quelconque.

L'invention a aussi pour objet, selon un deuxième aspect, un ensemble comportant un article tel que décrit ci-dessus et un outil d'actionnement configuré pour entraîner en rotation la vis de l'article, l'outil comportant un corps de préhension et au moins un organe complémentaire d'entrainement en saillie du corps de préhension, l'au moins un organe complémentaire d'entrainement étant configuré pour solliciter et entraîner en rotation l'au moins un organe d'entrainement de la partie interne de la tête de la vis, de sorte à visser et/ou dévisser la vis et ainsi assujettir et/ou désassujettir mécaniquement l'au moins une première partie de l'article au support quelconque, en fonction d'un sens d'actionnement de l'outil par son corps préhension.

L'au moins un organe complémentaire d'entrainement peut présenter au moins une paroi partiellement cylindrique pourvue d'au moins un bord complémentaire d'attaque orienté radialement et configuré pour venir au contact d'au moins un bord d'attaque formant l'au moins un organe d'entrainement de la partie interne de la tête de la vis.

L'au moins un organe complémentaire d'entrainement peut présenter un premier bord complémentaire d'attaque configuré pour venir au contact d'un premier bord d'attaque de la partie interne de la tête de la vis pour solliciter et entraîner la tête en rotation de sorte à visser la vis et ainsi assujettir mécaniquement l'au moins une première partie de l'article au support quelconque, et/ou un deuxième bord complémentaire d'attaque configuré pour venir au contact d'un deuxième bord d'attaque de la partie interne de la tête de la vis pour solliciter et entraîner la tête en rotation de sorte à dévisser la vis et ainsi désassujettir mécaniquement l'au moins une première partie de l'article au support quelconque.

L'outil d'actionnement comporte un corps de montage en saillie du corps de préhension, un élément d'entraînement pourvu de l'au moins un organe complémentaire d'entrainement et monté partiellement autour du corps de montage, et une bague de maintien montée partiellement autour de l'élément d'entraînement et configurée pour maintenir l'élément d'entraînement sur le corps de montage, avec l'au moins un organe complémentaire d'entrainement qui se trouve en saillie de la bague de maintien.

L'invention a encore pour objet, sous un autre aspect, un procédé d'assemblage et/ou désassemblage d'une première partie d'un article sur un support quelconque, à l'aide d'un ensemble tel que décrit ci-dessus, le procédé comportant l'étape d'assujettir et/ou désassujettir mécaniquement par vissage et/ou dévissage la première partie au support quelconque en vissant et/ou dévissant la vis dans le support quelconque grâce à la sollicitation et la rotation de l'au moins un organe d'entrainement de la partie interne de la tête de la vis par l'au moins un organe complémentaire d'entrainement de l'outil d'actionnement.

### BRÈVE DESCRIPTION DES FIGURES

L'invention, selon un exemple de réalisation, sera bien comprise et ses avantages apparaitront mieux à la lecture de la description détaillée qui suit, donnée à titre indicatif et nullement limitatif, en référence aux dessins annexés.
La figure 1 représente schématiquement et partiellement, en perspective, un article pourvu d'au moins une première partie assujettie mécaniquement à un support quelconque, ici formé par une deuxième partie de l'article, à l'aide d'une vis conforme à l'invention.
La figure 2 représente schématiquement et partiellement, en vue de face, l'article représenté sur la figure 1.
La figure 3 est une vue similaire à celle de la figure 1, dans laquelle un élément d'ornement est apposé sur la vis.
La figure 4 représente schématiquement et partiellement, en perspective éclatée, l'article visible sur les figures 1 et 2 et un outil d'actionnement de la vis pour l'assemblage des première et deuxième parties de cet article.
La figure 5 est une vue similaire à celle de la figure 4, prise selon un angle de vue différent.
La figure 6 est une vue en perspective isolée de la vis visible notamment sur les figures 4 et 5.
La figure 7 est une vue de profil de la vis représentée sur la figure 6.
La figure 8 est une vue de dessus de la vis représentée sur les figures 6 et 7.
La figure 9 est une vue de dessous de la vis représentée sur les figures 6 à 8.
La figure 10 est une vue en perspective isolée et éclatée de l'outil d'actionnement visible notamment sur les figures 4 et 5.
La figure 11 est une vue en perspective isolée et assemblée de cet outil d'actionnement.
La figure 12 est une vue de profil, prise selon un premier angle de vue, de de l'outil d'actionnement représenté sur la figure 11.
La figure 13 est une vue de profil, prise selon un deuxième angle de vue correspondant à un demi-tour par rapport au premier angle de vue, de l'outil d'actionnement représenté sur les figures 11 et 12.
La figure 14 est une vue en coupe des première et deuxième parties de l'article et d'un ensemble formé de l'outil d'actionnement et de la vis, situé à distance de l'article.
La figure 15 montre partiellement et en perspective l'ensemble représenté sur la figure 14.
La figure 16 est une vue similaire à celle de la figure 15, prise selon un angle de vue différent.
La figure 17 est une vue similaire à celle de la figure 14, avec la vis montée et vissée dans les première et deuxième parties de l'article, grâce à l'outil d'actionnement.
La figure 18 est une vue similaire à celle de la figure 14, sans l'outil d'actionnement.
La figures 19 est une vue similaire à celle de la figure 8, montrant une vis en vue de dessus selon une variante de réalisation.
La figure 20 est une vue de dessous de la vis représentée sur la figure 18.

### DESCRIPTION DÉTAILLÉE DE L'INVENTION

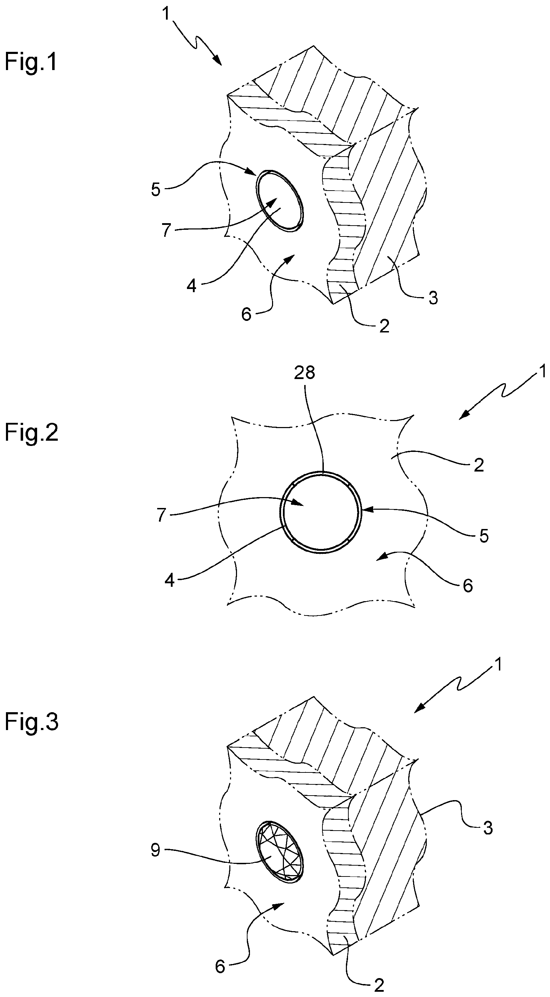

Les figure 1 à 3 illustrent partiellement un article 1, ici de maroquinerie, pourvu d'une première partie 2 et d'une deuxième partie 3 formant un support et assujettie mécaniquement à la première partie 2 à l'aide d'une vis 4 de fixation.

En variante, l'article peut être un article de bijouterie ou bien de cosmétique ou encore d'ameublement plutôt qu'un article de maroquinerie.

En variante encore, le support peut ne pas être formé par une deuxième partie de l'article, mais plutôt être distinct de cet article.

Sur les figures 1 et 2, la vis 4 est introduite dans un premier orifice 5 ménagé dans la première partie 2 et est pourvue d'une tête 7 qui vient à fleur d'une première surface externe 6 de cette première partie 2.

Comme visible sur la figure 2, le premier orifice 5 présente un diamètre légèrement plus grand que la zone de la tête 7 la plus externe et qui affleure la première surface externe 6, de sorte qu'un jeu radial 28 est prévu pour l'assemblage et le désassemblage de la vis 4.

Sur la figure 3, un élément d'ornement 9, ici formé par une pierre précieuse, est apposé sur la tête 7 de la vis 4 et s'étend en saillie de la surface externe 6 de la première partie 2.

L'élément d'ornement 9 est assujetti mécaniquement sur la tête 7 par exemple par collage ou sertissage ou encore soudage.

En variante, l'élément d'ornement peut être un métal précieux et/ou peut venir de matière avec la tête de la vis.

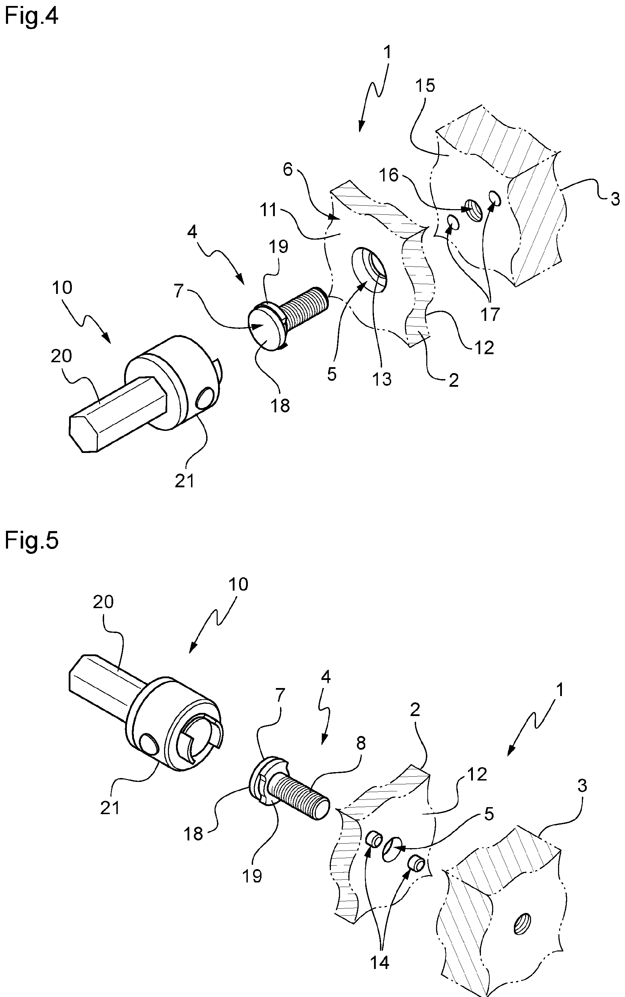

Les figures 4 et 5 montrent l'article 1 désassemblé, avec ses première partie 2 et deuxième partie 3 à distance l'une de l'autre, la vis 4 ainsi qu'un outil d'actionnement 10 de la vis 4.

Dans l'exemple illustré, la première partie 2 de l'article 1 comporte une première face externe 11 définissant sa première surface externe 6, et une première face interne 12 opposée à sa première face externe 11.

Le premier orifice 5 est ménagé de sorte à traverser la première partie 2 et déboucher de part et d'autre de ses première face externe 11 et première face interne 12.

Le diamètre du premier orifice 5 du côté de la première face externe 11 est plus grand que celui du côté de la première face interne 12, de sorte qu'une paroi de fond 13 formant butée est ménagée du côté de la première face interne 12.

La première partie 2 de l'article 1 comporte ici en outre des picots 14 ménagés en saillie de la première face interne 12, sensiblement autour du premier orifice 5.

Dans l'exemple illustré, la deuxième partie 3, formant le support, présente une deuxième face externe 15.

La deuxième partie 3 de l'article 1 est ici pourvue d'un trou taraudé 16 débouchant sur la deuxième face externe 15.

La deuxième partie 3 est en outre pourvue d'orifices de montage 17 sensiblement autour du trou taraudé 16 et qui débouchent sur la deuxième face externe 15.

L'article 1 est ici configuré de sorte que la première face interne 12 de la première partie 2 est prévue pour s'appliquer contre la deuxième face externe 15 de la deuxième partie 3, avec le premier orifice 5 qui se trouve en regard du trou taraudé 16 et les picots 14 qui sont prévus pour s'insérer dans les orifices de montage 17.

La vis 4 est pourvue d'un corps 8 s'étendant longitudinalement en saillie de la tête 7.

Dans l'exemple illustré, le corps 8 présente une forme cylindrique et une surface externe au moins partiellement filetée.

La tête 7 est ici pourvue d'une partie externe 18 et d'une partie interne 19 de laquelle saille le corps 8.

Ainsi, la partie interne 19 est interposée entre la partie externe 18 et le corps 8.

L'outil d'actionnement 10 comporte ici un corps de préhension 20, prévu pour être saisi directement ou indirectement par un utilisateur, et un corps d'entraînement 21 configuré pour transmettre un couple à la vis 4 de fixation lorsque le corps de préhension 20 est entraîné en rotation.

En particulier, comme expliqué ci-après plus en détail, c'est la partie interne 19 de la tête 7 de la vis 4 qui est configurée pour être sollicitée et entrainée en rotation par le corps d'entraînement 10 de l'outil d'actionnement 10.

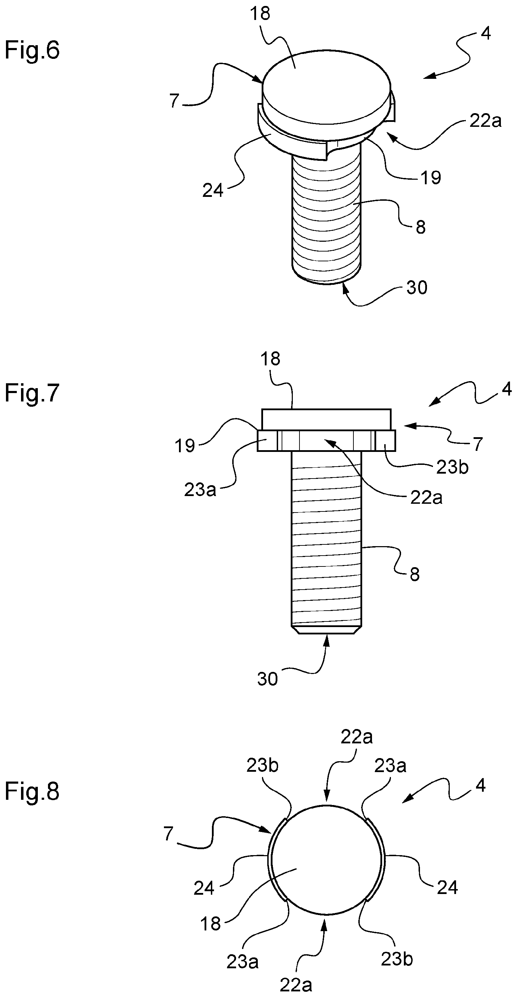

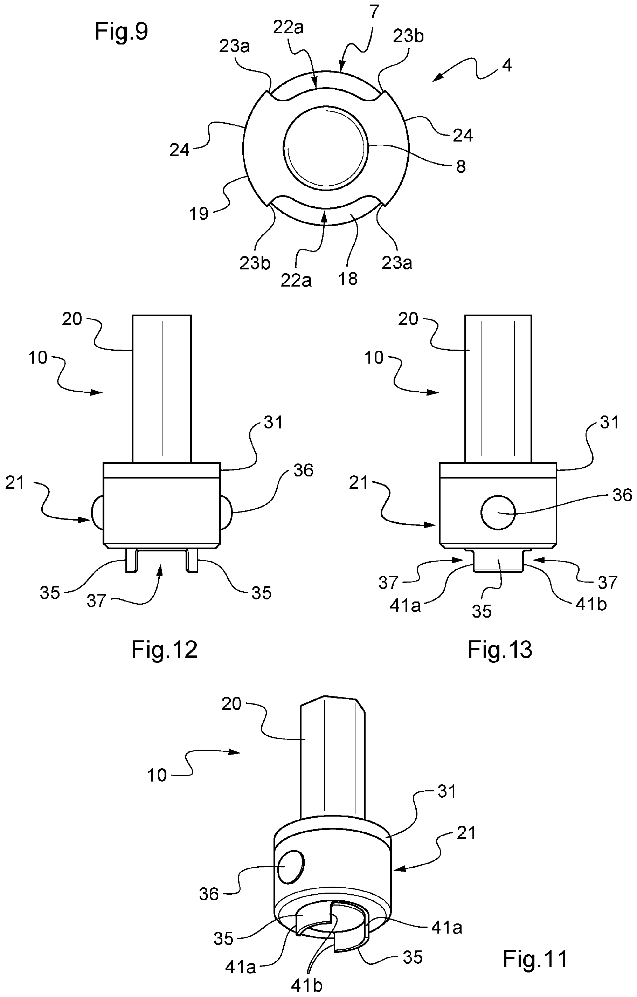

Les figures 6 à 9 montrent plus en détail la vis 4 de fixation, qui s'étend depuis la partie externe 18 de sa tête jusqu'à une extrémité distale 30 correspondant à une extrémité libre du corps 8 au moins partiellement fileté.

Dans l'exemple illustré, la partie externe 18 de la tête 7 présente une forme cylindrique et a une première épaisseur.

En variante, la partie externe de la tête peut présenter une forme rectangulaire, ou hexagonale ou encore triangulaire ou toute autre forme.

La partie interne 19 de la tête 7 a ici une deuxième épaisseur globalement identique à la première épaisseur.

En variante, la partie externe et la partie interne ont des première et deuxième épaisseurs différentes.

La partie interne 19 de la tête 7 s'étend ici partiellement et radialement au-delà de la partie externe 18 de la tête 7 et est pourvue d'encoches ménagées circonférentiellement, de sorte à délimiter plusieurs tronçons d'entrainement 24.

Deux tronçons d'entraînement 24 sont ainsi séparés d'un espace formé par une encoche respective.

En particulier, dans l'exemple illustré, la partie interne 19 de la tête 7 comporte deux premières encoches 22a ménagée circonférentiellement et délimitées chacun par un premier bord d'attaque 23a respectif et un deuxième bord d'attaque 23b respectif opposé au premier bord d'attaque 23a respectif (figures 7 et 8).

Chaque premier bord d'attaque 23a forme un premier organe d'entrainement configuré pour être sollicité et entraîné en rotation par l'outil d'actionnement 10 dans un sens dit horaire, de sorte à visser la vis 4 ; tandis que chaque deuxième bord d'attaque 23b forme un deuxième organe d'entrainement configuré pour être sollicité et entraîné en rotation par l'outil d'actionnement 10 dans un sens dit antihoraire, de sorte à dévisser la vis 4 (voir ci-après).

En d'autres termes, chaque tronçon d'entraînement 24 s'étend entre un premier bord d'attaque 23a et un deuxième bord d'attaque 23b.

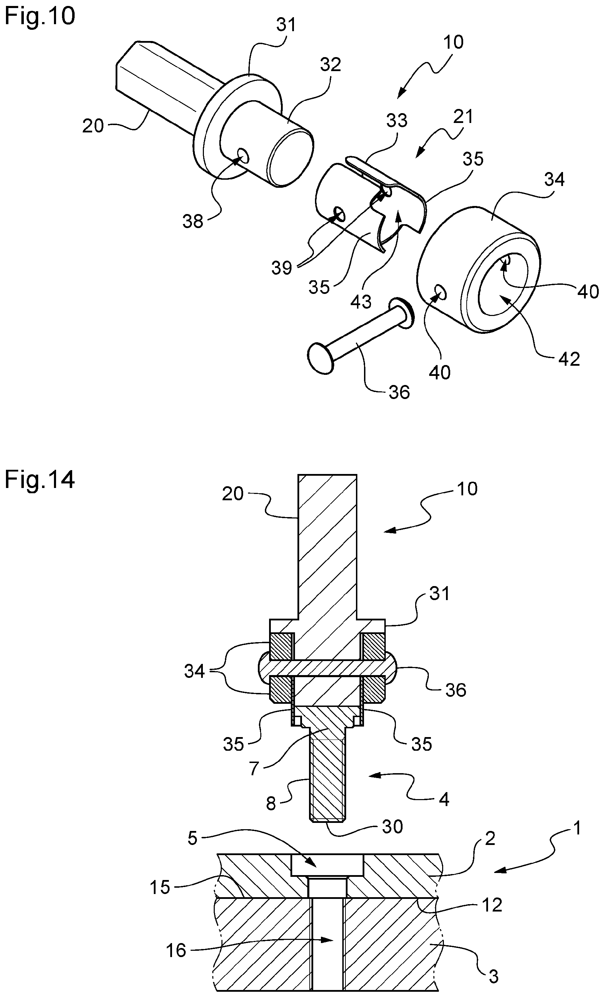

Les figures 10 à 13 montrent plus en détail l'outil d'actionnement 10.

Dans l'exemple illustré, le corps de préhension 20 et le corps d'entraînement 21 sont séparés par une paroi 31 en forme de garde.

Le corps d'entraînement 21 est pourvu d'un corps de montage 32 en saillie du corps de préhension 20, avec la paroi 31 en forme de garde qui est interposée entre le corps de montage 32 et le corps de préhension 20.

Un premier trou traversant 38 est ménagé radialement dans le corps de montage 32.

Le corps d'entraînement 21 est pourvu en outre d'un élément d'entraînement 33, par exemple ici en forme de tôle incurvée, et configuré pour être monté autour du corps de montage 32.

Des deuxièmes trous traversant 39 sont ménagés dans l'élément d'entraînement 33.

L'élément d'entraînement 33, en forme de tôle incurvée, est fendu et pourvu à une extrémité de plusieurs organes complémentaires d'entrainement 35 en forme de lame au moins partiellement cylindrique, et d'un espace d'écartement 37, par exemple en forme de fenêtre, entre deux organes complémentaires d'entrainement 35 successifs.

Chaque organe complémentaire d'entrainement 35 présente un premier bord complémentaire d'attaque 41a, ici configuré pour venir au contact d'un premier bord d'attaque 23a de la partie interne 19 de la tête 7 de la vis 4 pour solliciter et entraîner la tête 7 en rotation dans le sens horaire de sorte à visser la vis 4, et un deuxième bord complémentaire d'attaque 41b, ici configuré pour venir au contact d'un deuxième bord d'attaque 23b de la partie interne 19 de la tête 7 de la vis 4 pour solliciter et entraîner la tête 7 en rotation dans le sens antihoraire de sorte à dévisser la vis 4.

L'élément d'entraînement 33 est configuré pour ménager, entre ses organes complémentaires d'entrainement 35 en forme de lame, une cavité de réception 43.

Le corps d'entraînement 21 est aussi pourvu d'une bague de maintien 34, ici cylindrique et configurée pour être montée au moins partiellement autour de l'élément d'entraînement 33.

Des troisième trous traversant 40 sont ménagés dans la bague de maintien 34.

Le corps d'entraînement 21 est également pourvu d'un organe d'assemblage 36, par exemple ici formé par un rivet.

L'outil d'actionnement 10 est configuré de sorte que l'élément d'entraînement 33 est monté autour du corps de montage 32, avec les deuxièmes trous traversant 39 qui se trouvent en regard du premier trou traversant 38 de part et d'autre du corps de montage 32, et la bague de maintien 34 est montée partiellement autour de l'élément d'entraînement 33, avec les troisièmes trous traversant 40 qui se trouvent en regard des deuxièmes trous traversant 39 et en regard des premiers trous traversant 38 de part et d'autre du corps de montage 32 ; et avec l'organe d'assemblage 36 qui est monté au travers de la bague de maintien 34, de l'élément d'entraînement 33 et du corps de montage 32, par les premiers, deuxièmes et troisièmes trous traversant respectifs 38, 39 et 40, pour leur assujettissement mécanique.

L'outil d'actionnement 10 est en outre configuré de sorte que les organes complémentaires d'entrainement 35 en forme de lame de l'élément d'entraînement 33 s'étendent en saillie de la bague de maintien 34, au travers d'une ouverture 42 de cette dernière.

Les figures 14 à 18 montrent l'assujettissement mécanique de la première partie 2 de l'article 1 avec sa deuxième partie 3, grâce à la vis 4 qui est entraînée en rotation par l'outil d'actionnement 10.

La première face interne 12 de la première partie 2 est au contact de la deuxième face externe 15 de la deuxième partie 3, avec le premier orifice 5 qui est en regard du trou taraudé 16.

La vis 4 est disposée en regard de la première partie 2, avec son extrémité distale 30 du côté du corps 8 partiellement fileté qui se trouve en regard du premier orifice 5.

L'outil d'actionnement 10 est en prise sur la tête 7 de la vis 4 de fixation, par le biais de ses organes complémentaires d'entrainement 35 qui saillent de la bague de maintien 34, en laissant libre d'accès le corps de préhension 20.

Dans cette configuration, la partie interne 19 de la tête 7 qui est pourvue des organes d'entrainement s'étendant radialement au-delà de la partie externe 18, est accessible à l'outil d'actionnement 10.

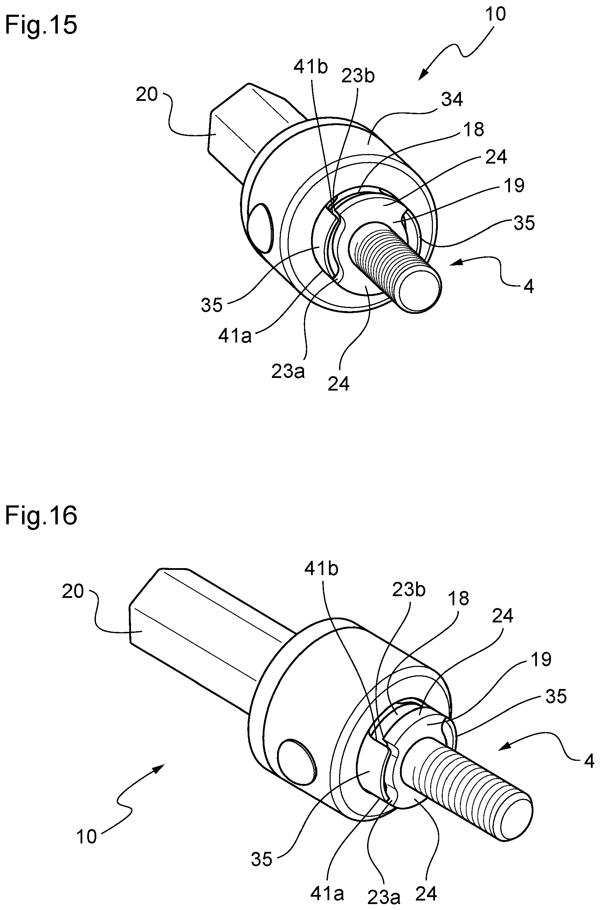

Comme visible en particulier sur les figures 15 et 16, la partie externe 18 de la tête 7 de la vis 4 est reçue au moins partiellement dans la cavité de réception 43 ménagée entre les organes complémentaires d'entrainement 35 en forme de lame et qui sont en saillie de la bague de maintien 34.

Les organes complémentaires d'entrainement 35 en forme de lame sont quant à elles reçues dans les premières encoches 22a ménagées dans la partie interne 19 de la tête 7 de la vis 4 de fixation, entre les tronçons d'entrainement 24.

En particulier, chaque premier bord complémentaire d'attaque 41a des organes complémentaires d'entrainement 35 de l'outil d'actionnement 10 est en regard d'un premier bord d'attaque 23a respectif de la partie interne 19 de la tête 7 de la vis 4 pour solliciter et entraîner la tête 7 en rotation dans le sens horaire de sorte à visser la vis 4.

En outre, dans ce même agencement, chaque deuxième bord complémentaire d'attaque 41b des organes complémentaires d'entrainement 35 est en regard d'un deuxième bord d'attaque 23b respectif de la partie interne 19 de la tête 7 de la vis 4 pour solliciter et entraîner la tête 7 en rotation dans le sens antihoraire de sorte à dévisser la vis 4.

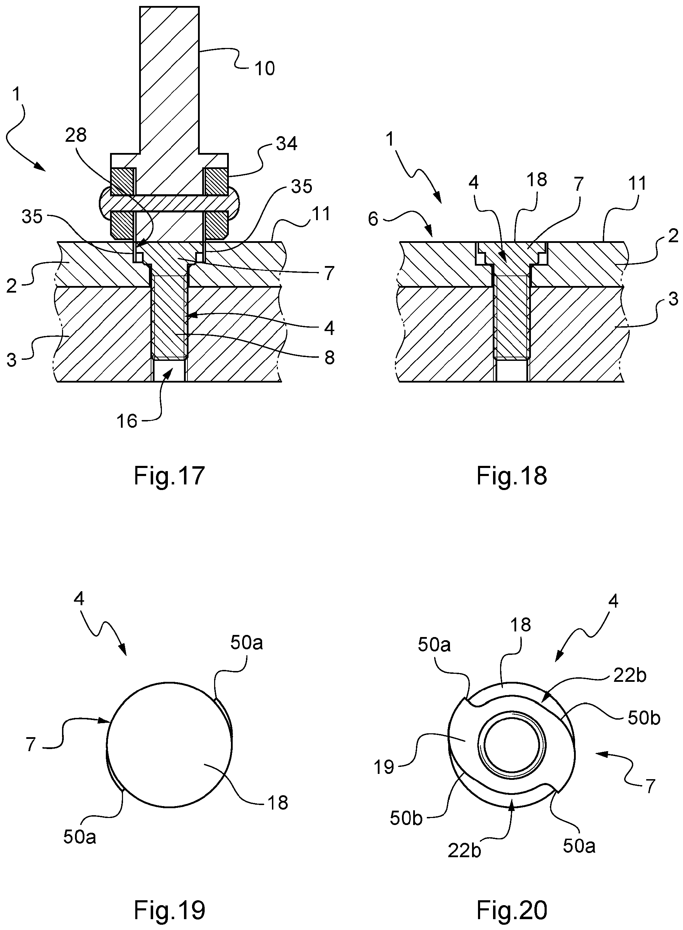

Sur la figure 17, la vis 4 a été introduite au travers du premier orifice 5 et son corps 8 a été vissé dans le trou taraudé 16 grâce à l'action de l'outil d'actionnement 10 sur la tête 7 de la vis 4.

La bague de maintien 34 vient sensiblement contre la première face externe 11 de la première partie 2 et les organes complémentaires d'entrainement 35 sont au moins partiellement introduits dans le jeu radial 28 ménagé dans le premier orifice 5 entre la tête 7 et la première partie 2.

Sur la figure 18, l'outil d'actionnement 10 est retiré et la première partie 2 et la deuxième partie 3 sont assujetties mécaniquement grâce à la vis 4 de fixation, avec la partie externe 18 de la tête 7 de la vis 4 qui vient à fleur de la première surface externe 6 de cette première partie 2.

Dans cette configuration, les organes d'entrainement de la tête 7 de la vis 4 sont rendus invisibles ou quasiment invisibles.

Seule reste visible principalement la partie externe 18 qui est dépourvue d'une empreinte d'actionnement.

Les figures 19 et 20 montrent une variante de réalisation de la vis 4 de fixation, dans laquelle la partie interne 19 de la tête 7 comporte des encoches qui se distinguent de celles décrites ci-dessus et illustrées notamment sur les figures 6 à 9.

En particulier, la partie interne 19 de la tête 7 comporte ici des deuxièmes encoches 22b ménagées circonférentiellement et délimitées chacune par un troisième bord d'attaque 50a, du même type que les premiers bords d'attaque décrits ci-dessus, et par un bord fuyant incurvé 50b opposé au troisième bord d'attaque 50a respectif.

Chaque troisième bord d'attaque 50a forme un premier organe d'entrainement configuré pour être sollicité et entraîné en rotation dans le sens horaire par l'outil d'actionnement 10, par exemple avec un organe complémentaire d'entrainement comme décrit ci-dessus, de sorte à visser la vis 4, et avec le bord fuyant incurvé 50b qui empêche l'entraînement en rotation dans le sens antihoraire de la tête 7 par l'outil d'actionnement 10 et ainsi le dévissage de la vis 4 et le désassujettissement mécanique des première et deuxième parties 2, 3 de l'article 1.

Des variantes non illustrées sont décrites ci-dessous.

La tête de la vis peut comporter une seule encoche et un seul tronçon d'entraînement, avec des premier et deuxième bords d'attaque tels que décrits ci-dessus, ou bien avec un troisième bord d'attaque et un bord fuyant comme décrits ci-dessus.

La tête de la vis peut comporter plus de deux encoches et donc plus de deux tronçons d'entraînement, avec une pluralité de premiers et deuxième bords d'attaque tels que décrits ci-dessus, ou bien avec une pluralité de troisièmes bords d'attaque et de bords fuyant comme décrits ci-dessus.

Les tronçons d'entraînement peuvent présenter des bords d'attaque avec des formes différentes, et l'outil d'actionnement peut aussi présenter des bords d'attaque complémentaires avec des formes différentes complémentaires.

L'outil d'actionnement peut comporter un élément d'entraînement directement venu de matière avec le cors de préhension et/ou avec le corps de montage.

Plus généralement, l'invention ne se limite pas aux exemples décrits et représentés. L'invention est définie par les revendications.

## Revendications

1. Article (1) de maroquinerie ou bien de bijouterie, de cosmétique ou encore d'ameublement, pourvu d'au moins une première partie (2) configurée pour être assujettie mécaniquement à un support (3) quelconque, l'article (1) comportant une vis (4) qui est configurée pour assujettir mécaniquement l'au moins une première partie (2) au support (3) quelconque à l'aide d'un outil d'actionnement (10), la vis (4) comportant une tête (7) et un corps (8) s'étendant longitudinalement en saillie de la tête (7), la tête (7) comportant une partie externe (18) et une partie interne (19) interposée entre la partie externe (18) et le corps (8), le corps (8) étant au moins partiellement fileté, la partie interne (19) de la tête (7) de la vis (4) comportant au moins un organe d'entrainement s'étendant radialement au-delà de la partie externe (18) et étant configuré pour être sollicité et entraîné en rotation par l'outil d'actionnement (10) de sorte à visser et/ou dévisser la vis (4) et ainsi assujettir et/ou désassujettir mécaniquement l'au moins une première partie (2) de l'article (1) au support (3) quelconque, et l'article (1) étant **caractérisé en ce que** la vis (4) est introduite dans un premier orifice (5) ménagé dans l'au moins une première partie (2) avec la tête (7) de la vis (4) qui vient à fleur d'une première surface externe (6) de l'au moins une première partie (2) de l'article (1) lorsque l'au moins une première partie (2) est assujettie mécaniquement au support (3) quelconque.

2. Article selon la revendication 1, **caractérisé en ce que** la partie interne (19) de la tête (7) est pourvue d'une pluralité d'organes d'entrainement s'étendant radialement au-delà de la partie externe (19) et d'au moins un espace séparant les organes d'entraînement.

3. Article selon l'une des revendications 1 et 2, **caractérisé en ce que** la partie interne (19) de la tête (7) comporte au moins une première encoche (22a) ménagée circonférentiellement et délimitée par un premier bord d'attaque (23a) et un deuxième bord d'attaque (23b) opposé au premier bord d'attaque (23a), avec le premier bord d'attaque (23a) qui forme un premier organe d'entrainement configuré pour être sollicité et entraîné en rotation par l'outil d'actionnement (10) de sorte à visser la vis (4) et ainsi assujettir mécaniquement l'au moins une première partie (2) de l'article (1) au support (3) quelconque, et avec le deuxième bord d'attaque (23b) qui forme un deuxième organe d'entrainement configuré pour être sollicité et entraîné en rotation par l'outil d'actionnement (10) de sorte à dévisser la vis (4) et ainsi désassujettir mécaniquement l'au moins une première partie (2) de l'article (1) au support (3) quelconque.

4. Article selon l'une quelconque des revendications 1 à 3, **caractérisé en ce que** la partie interne (19) de la tête (7) comporte au moins une deuxième encoche (22b) ménagée circonférentiellement et délimitée par un troisième bord d'attaque (50a) et un bord fuyant incurvé (50b) opposé au troisième bord d'attaque (50a), avec le troisième bord d'attaque (50a) qui forme un premier organe d'entrainement configuré pour être sollicité et entraîné en rotation par l'outil d'actionnement (10) de sorte à visser la vis (4) et ainsi assujettir mécaniquement l'au moins une première partie (2) de l'article (1) au support (3) quelconque, et avec le bord fuyant incurvé (50b) qui empêche l'entraînement en rotation de la tête (7) par l'outil d'actionnement (10) et ainsi le dévissage de la vis (4) et le désassujettissement mécanique de l'au moins une première partie (2) de l'article (1) au support (3) quelconque.

5. Ensemble comportant un article (1) selon l'une quelconque des revendications 1 à 4 et un outil d'actionnement (10) configuré pour entraîner en rotation la vis (4) de l'article (1), l'outil d'actionnement (10) comportant un corps de préhension (20) et au moins un organe complémentaire d'entrainement (35) en saillie du corps de préhension (20), l'au moins un organe complémentaire d'entrainement (35) étant configuré pour solliciter et entraîner en rotation l'au moins un organe d'entrainement de la partie interne (19) de la tête (7) de la vis (4), de sorte à visser et/ou dévisser la vis (4) et ainsi assujettir et/ou désassujettir mécaniquement l'au moins une première partie (2) de l'article (1) au support (3) quelconque, en fonction d'un sens d'actionnement de l'outil (10) par son corps préhension (20).

6. Ensemble selon la revendication 5, **caractérisé en ce que** l'au moins un organe complémentaire d'entrainement (35) présente au moins une paroi partiellement cylindrique pourvue d'au moins un bord complémentaire d'attaque (41a, 41b) orienté radialement et configuré pour venir au contact d'au moins un bord d'attaque (23a, 23b) formant l'au moins un organe d'entrainement de la partie interne (19) de la tête (7) de la vis (4).

7. Ensemble selon l'une des revendications 5 et 6, **caractérisé en ce que** l'au moins un organe complémentaire d'entrainement (35) présente un premier bord complémentaire d'attaque (41a) configuré pour venir au contact d'un premier bord d'attaque (23a) de la partie interne (19) de la tête (7) de la vis (4) pour solliciter et entraîner la tête (7) en rotation de sorte à visser la vis (4) et ainsi assujettir mécaniquement l'au moins une première partie (2) de l'article (1) au support (3) quelconque, et/ou un deuxième bord complémentaire d'attaque (41b) configuré pour venir au contact d'un deuxième bord d'attaque (23b) de la partie interne (19) de la tête (7) de la vis (4) pour solliciter et entraîner la tête (7) en rotation de sorte à dévisser la vis (4) et ainsi désassujettir mécaniquement l'au moins une première partie (2) de l'article (1) au support (3) quelconque.

8. Ensemble selon l'une des revendications 5 à 7, **caractérisé en ce que** l'outil d'actionnement (10) comporte un corps de montage (32) en saillie du corps de préhension (20), un élément d'entraînement (33) pourvu de l'au moins un organe complémentaire d'entrainement (35) et monté partiellement autour du corps de montage (32), et une bague de maintien (34) montée partiellement autour de l'élément d'entraînement (33) et configurée pour maintenir l'élément d'entraînement (33) sur le corps de montage (32), avec l'au moins un organe complémentaire d'entrainement (35) qui se trouve en saillie de la bague de maintien (34).

9. Procédé d'assemblage et/ou désassemblage de la première partie (2) de l' article (1) d'un ensemble selon l'une quelconque des revendications 5 à 8, sur un support (3) quelconque, à l'aide de la vis (4) et l'outil d'actionnement (10) de l' ensemble, le procédé comportant l'étape d'assujettir et/ou désassujettir mécaniquement par vissage et/ou dévissage la première partie (2) au support (3) quelconque en vissant et/ou dévissant la vis (4) dans le support (3) quelconque grâce à la sollicitation et la rotation de l'au moins un organe d'entrainement de la partie interne (19) de la tête (7) de la vis (4) par l'au moins un organe complémentaire d'entrainement (35) de l'outil d'actionnement (10).

## Patentansprüche

1. Artikel (1) aus dem Bereich Lederwaren oder Schmuck, Kosmetika oder auch Möbel, der mit mindestens einem ersten Teil (2) versehen ist, das so eingerichtet ist, dass es mechanisch an einem beliebigen Träger (3) befestigt werden kann, wobei der Artikel (1) eine Schraube (4) umfasst, die so eingerichtet ist, dass sie das mindestens eine erste Teil (2) mithilfe eines Betätigungswerkzeugs (10) mechanisch an einem beliebigen Träger (3) befestigt, wobei die Schraube (4) einen Kopf (7) und einen Körper (8) umfasst, der sich längs von dem Kopf (7) aus erstreckt, wobei der Kopf (7) einen äußeren Teil (18) und einen inneren Teil (19), der zwischen dem äußeren Teil (18) und dem Körper (8) angeordnet ist, umfasst, wobei der Körper (8) mindestens teilweise mit einem Gewinde versehen ist, wobei der innere Teil (19) des Kopfes (7) der Schraube (4) mindestens ein Mitnahmeelement umfasst, das sich radial über das äußere Teil (18) hinaus erstreckt und so eingerichtet ist, dass es von dem Betätigungswerkzeug (10) belastet und in Drehung versetzt werden kann, so dass die Schraube (4) eingeschraubt und/oder herausgeschraubt wird und somit das mindestens eine erste Teil (2) des Artikels (1) an einem beliebigen Träger (3) mechanisch befestigt und/oder von diesem gelöst wird, und wobei der Artikel (1) **dadurch gekennzeichnet ist, dass** die Schraube (4) in eine erste Öffnung (5) eingeführt wird, die in dem mindestens einen ersten Teil (2) ausgebildet ist, wobei der Kopf (7) der Schraube (4) bündig mit einer ersten Außenfläche (6) des mindestens einen ersten Teils (2) des Artikels (1) abschließt, wenn das mindestens eine erste Teil (2) mechanisch an dem beliebigen Träger (3) befestigt ist.

2. Artikel nach Anspruch 1, **dadurch gekennzeichnet, dass** der innere Teil (19) des Kopfes (7) mit einer Vielzahl von sich radial über den äußeren Teil (19) erstreckenden Mitnahmeelementen und mindestens einem Zwischenraum versehen ist, der die Mitnahmeelemente voneinander trennt.

3. Artikel nach einem der Ansprüche 1 und 2, **dadurch gekennzeichnet, dass** der innere Teil (19) des Kopfes (7) mindestens eine erste Kerbe (22a) umfasst, die umlaufend ausgebildet und durch eine erste Vorderkante (23a) und eine zweite Vorderkante (23b) gegenüber der ersten Vorderkante (23a) begrenzt ist, wobei die erste Vorderkante (23a) ein erstes Mitnahmeelement bildet, das so eingerichtet ist, dass es von dem Betätigungswerkzeug (10) belastet und in Drehung versetzt werden kann, so dass die Schraube (4) eingeschraubt wird und somit das mindestens eine erste Teil (2) des Artikels (1) mechanisch an dem beliebigen Träger (3) befestigt wird, und wobei die zweite Vorderkante (23b) ein zweites Mitnahmeelement bildet, das so eingerichtet ist, dass es von dem Betätigungswerkzeug (10) belastet und in Drehung versetzt werden kann, so dass die Schraube (4) herausgeschraubt wird und somit das mindestens eine erste Teil (2) des Artikels (1) mechanisch von dem beliebigen Träger (3) gelöst wird.

4. Artikel nach einem der Ansprüche 1 bis 3, **dadurch gekennzeichnet, dass** der innere Teil (19) des Kopfes (7) mindestens eine zweite Kerbe (22b) umfasst, die umlaufend ausgebildet und durch eine dritte Vorderkante (50a) und eine der dritten Vorderkante (50a) gegenüberliegende gekrümmte Hinterkante (50b) begrenzt ist, wobei die dritte Vorderkante (50a) ein erstes Mitnahmeelement bildet, das so eingerichtet ist, dass es von dem Betätigungswerkzeug (10) belastet und in Drehung versetzt werden kann, so dass die Schraube (4) eingeschraubt wird und somit das mindestens eine erste Teil (2) des Artikels (1) mechanisch an dem beliebigen Träger (3) befestigt wird, und wobei die gekrümmte Hinterkante (50b) das Mitdrehen des Kopfes (7) durch das Betätigungswerkzeug (10) und somit das Herausdrehen der Schraube (4) und das mechanische Lösen des mindestens einen ersten Teils (2) des Artikels (1) von dem beliebigen Träger (3) verhindert.

5. Baugruppe mit einem Artikel (1) nach einem der Ansprüche 1 bis 4 und einem Betätigungswerkzeug (10), das so eingerichtet ist, dass es die Schraube (4) des Artikels (1) in Drehung versetzt, wobei das Betätigungswerkzeug (10) einen Greifkörper (20) und mindestens ein komplementäres Mitnahmeelement (35) umfasst, das aus dem Greifkörper (20) herausragt, wobei das mindestens eine komplementäre Mitnahmeelement (35) so eingerichtet ist, dass es das mindestens eine Mitnahmeelement des inneren Teils (19) des Kopfes (7) der Schraube (4) belastet und in Drehung versetzt, so dass die Schraube (4) eingeschraubt und/oder herausgeschraubt wird und somit das mindestens eine erste Teil (2) des Artikels (1) mechanisch an dem beliebigen Träger (3) befestigt und/oder von diesem gelöst wird, in Abhängigkeit von einer Betätigungsrichtung des Werkzeugs (10) über seinen Greifkörper (20).

6. Baugruppe nach Anspruch 5, **dadurch gekennzeichnet, dass** das mindestens eine komplementäre Mitnahmeelement (35) mindestens eine teilweise zylindrische Wand aufweist, die mit mindestens einer komplementären, radial ausgerichteten Vorderkante (41a, 41b) versehen ist, die so eingerichtet ist, dass sie mit mindestens einer Vorderkante (23a, 23b) in Kontakt kommt, die das mindestens eine Mitnahmeelement des inneren Teils (19) des Kopfes (7) der Schraube (4) bildet.

7. Baugruppe nach einem der Ansprüche 5 und 6, **dadurch gekennzeichnet, dass** das mindestens eine komplementäre Mitnahmeelement (35) eine erste komplementäre Vorderkante (41a) aufweist, die so eingerichtet ist, dass sie mit einer ersten Vorderkante (23a) des inneren Teils (19) des Kopfes (7) der Schraube (4) in Kontakt kommt, um den Kopf (7) zu belasten und in Drehung zu versetzen, so dass die Schraube (4) eingeschraubt wird und somit das mindestens eine erste Teil (2) des Artikels (1) mechanisch an dem beliebigen Träger (3) befestigt wird, und/oder eine zweite komplementäre Vorderkante (41b), die so eingerichtet ist, dass sie mit einer zweiten Vorderkante (23b) des inneren Teils (19) des Kopfes (7) der Schraube (4) in Kontakt kommt, um den Kopf (7) zu belasten und in Drehung zu versetzen, so dass die Schraube (4) herausgeschraubt wird und somit das mindestens eine erste Teil (2) des Artikels (1) mechanisch von dem beliebigen Träger (3) gelöst wird.

8. Baugruppe nach einem der Ansprüche 5 bis 7, **dadurch gekennzeichnet, dass** das Betätigungswerkzeug (10) einen Montagekörper (32), der aus dem Greifkörper (20) herausragt, ein Mitnahmeelement (33), das mit dem mindestens einen komplementären Mitnahmeelement (35) versehen und teilweise um den Montagekörper (32) herum montiert ist, und einen Haltering (34) umfasst, der teilweise um das Mitnahmeelement (33) herum montiert und so eingerichtet ist, dass er das Mitnahmeelement (33) an dem Montagekörper (32) hält, wobei das mindestens eine komplementäre Mitnahmeelement (35) aus dem Haltering (34) herausragt.

9. Verfahren zum Anbringen und/oder Abnehmen des ersten Teils (2) des Artikels (1) einer Baugruppe nach einem der Ansprüche 5 bis 8 an einem beliebigen Träger (3) mithilfe der Schraube (4) und des Betätigungswerkzeugs (10) der Baugruppe, wobei das Verfahren den Schritt umfasst, das erste Teil (2) durch Einschrauben und/oder Herausschrauben mechanisch in/aus dem beliebigen Träger (3) zu befestigen und/oder von diesem zu lösen, indem die Schraube (4) in den beliebigen Träger (3) durch die Beanspruchung und Drehung des mindestens einen Mitnahmeelements des inneren Teils (19) des Kopfes (7) der Schraube (4) durch das mindestens eine komplementäre Mitnahmeelement (35) des Betätigungswerkzeugs (10) eingeschraubt und/oder aus diesem herausgeschraubt wird.

## Claims

1. Article (1) of leatherware or jewellery, cosmetics or furniture, provided with at least one first part (2) configured to be mechanically connected to an arbitrary support (3), the article (1) comprising a screw (4) which is configured to mechanically connect the at least one first part (2) to the arbitrary support (3) using an actuating tool (10), the screw (4) comprising a head (7) and a longitudinally extending body (8) projecting from the head (7), the head (7) comprising an outer part (18) and an inner part (19) interposed between the outer part (18) and the body (8), the body (8) being at least partially threaded, the inner part (19) of the head (7) of the screw (4) comprising at least one drive member extending radially beyond the outer part (18) and being configured to be loaded and driven in rotation by the actuating tool (10) so as to screw in and/or unscrew the screw (4) and thus mechanically connect and/or disconnect the at least one first part (2) of the article (1) to or from the arbitrary support (3), and the article (1) being **characterised in that** the screw (4) is inserted into a first hole (5) formed in the at least one first part (2) with the head (7) of the screw (4), which comes flush with a first outer surface (6) of the at least one first part (2) of the article (1) when the at least one first part (2) is mechanically connected to the arbitrary support (3).

2. Article according to claim 1, **characterised in that** the inner part (19) of the head (7) is provided with a plurality of drive members extending radially beyond the outer part (19) and with at least one space separating the drive members.

3. Article according to one of claims 1 and 2, **characterised in that** the inner part (19) of the head (7) comprises at least one first circumferentially formed notch (22a) delimited by a first leading edge (23a) and a second leading edge (23b) opposite to the first leading edge (23a), with the first leading edge (23a) forming a first drive member configured to be engaged and driven in rotation by the actuating tool (10) so as to screw in the screw (4) and thus mechanically connect the at least one first part (2) of the article (1) to the arbitrary support (3), and with the second leading edge (23b) forming a second drive member configured to be engaged and driven in rotation by the actuating tool (10) so as to unscrew the screw (4) and thus mechanically disconnect the at least one first part (2) of the article (1) from the arbitrary support (3).

4. Article according to any one of claims 1 to 3, **characterised in that** the inner part (19) of the head (7) comprises at least one second notch (22b) circumferentially formed and delimited by a third leading edge (50a) and a curved trailing edge (50b) opposite to the third leading edge (50a), with the third leading edge (50a) forming a first drive member configured to be loaded and driven in rotation by the actuating tool (10) so as to screw in the screw (4) and thus mechanically connect the at least one first part (2) of the article (1) to the arbitrary support (3), and with the curved trailing edge (50b) preventing the head (7) being driven in rotation by the actuating tool (10) and thus the screw (4) being unscrewed and the at least one first part (2) of the article (1) being mechanically detached from the arbitrary support (3).

5. Assembly comprising an article (1) according to any one of claims 1 to 4 and an actuating tool (10) configured to drive the screw (4) of the article (1) in rotation, the actuating tool (10) comprising a gripping body (20) and at least one complementary drive member (35) projecting from the gripping body (20), the at least one complementary drive member (35) being configured to engage and drive in rotation the at least one drive member of the inner part (19) of the head (7) of the screw (4) so as to screw in and/or unscrew the screw (4) and thus mechanically connect and/or disconnect the at least one first part (2) of the article (1) to or from the arbitrary support (3), depending on a direction of actuation of the tool (10) by its gripping body (20).

6. Assembly according to claim 5, **characterised in that** the at least one complementary drive member (35) has at least one partially cylindrical wall provided with at least one complementary leading edge (41a, 41b) oriented radially and configured to come into contact with at least one leading edge (23a, 23b) forming the at least one drive member of the inner part (19) of the head (7) of the screw (4).

7. Assembly according to one of claims 5 and 6, **characterised in that** the at least one complementary drive member (35) has a first complementary leading edge (41a) configured to come into contact with a first leading edge (23a) of the inner part (19) of the head (7) of the screw (4) in order to load and drive in rotation the head (7) so as to screw in the screw (4) and thus mechanically connect the at least one first part (2) of the article (1) to the arbitrary support (3), and/or a second complementary leading edge (41b) configured to come into contact with a second leading edge (23b) of the inner part (19) of the head (7) of the screw (4) in order to load and drive in rotation the head (7) so as to unscrew the screw (4) and thus mechanically disconnect the at least one first part (2) of the article (1) from the arbitrary support (3).

8. Assembly according to one of claims 5 to 7, **characterised in that** the actuating tool (10) comprises a mounting body (32) projecting from the gripping body (20), a drive element (33) provided with the at least one complementary drive member (35) and mounted partially around the mounting body (32), and a retaining ring (34) mounted partially around the drive element (33) and configured to hold the drive element (33) on the mounting body (32), with the at least one complementary drive member (35) protruding from the retaining ring (34).

9. Method for assembling and/or disassembling the first part (2) of the article (1) of an assembly according to any one of claims 5 to 8, on or from an arbitrary support (3) with the aid of the screw (4) and the actuating tool (10) of the assembly, the method comprising the step of mechanically connecting and/or disconnecting, by screwing in and/or unscrewing, the first part (2) to or from the arbitrary support (3) by screwing and/or unscrewing the screw (4) into or from the arbitrary support (3) via the engaging and rotation of the at least one drive member of the inner part (19) of the head (7) of the screw (4) by the at least one complementary drive member (35) of the actuating tool (10).
